(19) Europäisches Patentamt

European Patent Office

Office européen des brevets

(11) **EP 1 498 399 A2**

(12) **EUROPEAN PATENT APPLICATION**
published in accordance with Art. 158(3) EPC

(43) Date of publication:
**19.01.2005 Bulletin 2005/03**

(51) Int Cl.[7]: **C04B 35/035**

(21) Application number: **02710886.9**

(86) International application number:
**PCT/ES2002/000049**

(22) Date of filing: **31.01.2002**

(87) International publication number:
**WO 2003/064348 (07.08.2003 Gazette 2003/32)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **AZUCARERA EBRO, S.L. SOCIEDAD UNIPERSONAL**
**28014 Madrid (ES)**

(72) Inventors:
• **ACOSTA ECHEVERRIA, Anselmo**
  **Uni. de Castilla-La M.**
  **E-13071 Ciudad Real (ES)**
• **RUIZ HOLST, Manuel**
  **Azucarera Ebro, S.L., Soc. Uni.**
  **E-28014 Madrid (ES)**

(74) Representative: **Maldonado Jordan, Julia**
  **Raimundo Fernandez Villaverde, 45-1A exterior**
  **28003 Madrid (ES)**

(54) **USE OF A PRECIPITATED CALCIUM CARBONATE (PCC) ORIGINATING FROM SUGAR AS A RAW MATERIAL IN THE CERAMIC INDUSTRY**

(57)    Due to its physicochemical and mineralogical properties, precipitated calcium carbonate (PCC) of sugar origin can be used as a raw material in the ceramic industry, particularly in the manufacture of porous ceramics.

EP 1 498 399 A2

**Description**

**FIELD OF THE INVENTION**

The invention generally refers to the use of precipitated calcium carbonate (PCC) of sugar origin as a raw material in the ceramic industry, particularly in the manufacture of porous ceramic products.

**BACKGROUND OF THE INVENTION**

The PCCs of sugar origin, mistakenly known as lime scum or carbonate slurry from a sugar mill, are the inorganic precipitates resulting from the purification of beet juices by means of liming and subsequent carbonatation to remove therefrom all those substances which are not sugars. Their production is carried out from limestone ($CaCO_3$) whose purpose is to supply the CaO and $CO_2$ necessary for carrying out the process of purifying those non-sugared substances of the diffusion juice from the beet, because the formed CaO is transformed into $Ca(OH)_2$, which causes an increase in pH, favoring the coagulation of said substances. The $CO_2$ precipitates the $Ca(OH)_2$, and with it the non-sugar substances, thus being able to separate the juice on one hand and the precipitate, which is the PCC of sugar origin, on the other. The generation of the PCCs of sugar origin occurs by means of the following series of reactions:

$$CaCO_3 + Q \rightarrow CaO + CO_2$$

$$CaO + H_2O \rightarrow Ca(OH)_2$$

$$Ca(OH)_2 + CO_2 \rightarrow CaCO_3 \text{ (PCC of sugar origin)}$$

The PCCs of sugar origin exhibit a powdery appearance with grayish hues and they easily agglomerate, forming lumps. Currently, this material, which is generated in enormous amounts in the sugar industries, is used as a filling material for gravel mines, waste heaps, etc., and in some cases for the correction of soils with excessively clay-like textures, or with acid pH.

**SUMMARY OF THE INVENTION**

The invention is faced with the drawback of providing an alternative use to the one which is currently carried out with the PCCs of sugar origin generated in the sugar industry.
The solution provided by this invention is based on the fact that, after the physicochemical and mineralogical characterization of said PCCs of sugar origin, it has been proven that said PCCs of sugar origin can be used in the same fields of application as commercial calcium carbonates, with the exception of those fields in which color is the most important requirement, for example, in the porous ceramic industry.
The use of calcium carbonate as a raw material in the porous ceramic industry exercises a double function since, on one hand, it serves as a calcium contribution so that when the clays are melted, they form a crystalline structure, incorporating the calcium provided by the carbonate, generating calcium silicates, into its crystalline structure, providing strength and resistance to the kilned piece, and on the other hand, when it decomposes it releases a $CO_2$ amount which has the purpose of creating pores in the structure of the piece, such that the water and air can circulate through it with no problems, thus reducing the drawbacks of expansion due to humidity, increasing frost resistance, etc. To exercise these functions, the calcium carbonate must thermally decompose. The natural calcium carbonate used in the porous ceramic industry decomposes at a temperature of approximately 840°C.
A solution such as the one provided by this invention allows developing a process for manufacturing porous ceramic products comprising the use of said PCCs of sugar origin as a raw material, taking advantage of its $CO_2$ content which is higher than the corresponding stoichiometric content of calcium carbonate and its lower decomposition temperature.

**BRIEF DESCRIPTION OF THE DRAWINGS**

Figure 1 shows an X-ray diffraction (XRD) pattern of a calcium carbonate of sugar origin (PCC) compared to an XRD pattern of a commercial ground calcium carbonate (GCC) used in the porous ceramic industry.

Figure 2 shows a diagram showing the mass loss rate of a PCC of sugar origin and of a GCC in relation to temperature.

Figure 3 shows an x-ray diffractogram of a powder obtained in a pilot plant by mixing red clay and PCC of sugar origin at an approximate 6% PCC of sugar origin ratio (See Example 2, section 2.2).

Figure 4 shows a graph showing the time-dependent drying curve of a paste obtained in a pilot plant by adding water to a red clay and PCC of sugar origin mixture at an approximate 6% PCC of sugar origin ratio (see Example 2, section 2.2).

Figure 5 shows the result of the dilatometry test carried out on a paste obtained in a pilot plant by adding water to a red clay and PCC of sugar origin mixture at an approximate 6% PCC of sugar origin ratio (see Example 2, section 2.2).

Figure 6 shows an x-ray diffractogram of a roofing tile fired at 950°C obtained from a red clay and PCC of sugar origin mixture at an approximate 6% PCC of sugar origin ratio (see Example 2, section 2.2).

## DETAILED DESCRIPTION OF THE INVENTION

The invention generally relates to the use of a precipitated calcium carbonate (PCC) of sugar origin as a raw material in the porous ceramic industry.

PCC of sugar origin is a known material generated in the sugar industry, comprising for the most part calcium carbonate (in calcite form) and has a typical decomposition temperature of 770°C. Example 1 discloses the obtainment and characterization of a PCC of sugar origin suitable for putting the present invention into practice.

In a particular embodiment of this invention, a process is provided for manufacturing a porous ceramic product comprising the steps of preparing a paste, kneading, molding, drying and firing, characterized in that said paste contains a PCC of sugar origin. Said paste containing PCC of sugar origin constitutes a further object of this invention.

More specifically, the invention provides a process for manufacturing a porous ceramic product, hereinafter process of the invention, comprising:

a) mixing a carbonate-deficient clay-based material, a PCC of sugar origin and water, to obtain a paste susceptible to kneading;

b) kneading said paste susceptible to kneading obtained in step a);

c) molding said paste kneaded in step b) into the desired shape to obtain a molded material; and

d) drying and firing said molded material to obtain a porous ceramic product.

Illustrative examples of ceramic products which can be obtained by means of the process of the invention include any type of porous ceramic pieces, for example, bricks, roofing tiles, floor tiles, glazed wall tiles, etc.

Any carbonate-deficient clay-based material which is suitable for the type of porous ceramic product to be obtained can be used as the carbonate-deficient clay-based material, such as clays. Any carbonate-deficient clay useful for manufacturing porous ceramic products can be used in the process of the invention.

The process of the invention begins by metering and mixing the suitable amounts of clay-based material and PCC of sugar origin. In a particular embodiment, the amount of calcium carbonate (provided by the PCC of sugar origin) mixed with the clay-based material is comprised between 5 and 20% by weight of the total weight of the mixture, which indicates that said PCC of sugar origin (with a calcium carbonate content comprised between 88 and 92%) truly constitutes a raw material for manufacturing the porous ceramic product.

To facilitate the mixing of the starting materials, the latter must be provided with the suitable particle size, less than 500 µm as a whole, proceeding, where applicable, to the corresponding milling and sieving, by conventional methods, for the purpose of choosing the fractions with the desired particle size. PCC of sugar origin generally has a particle size suitable for carrying out the process of the invention, since all of the PCC of sugar origin particles have a size equal to or less than 20 µm, 80% of which have a size equal to or less than 10 µm.

A suitable amount of water is added to the clay-based material and PCC of sugar origin mixture for the purpose of obtaining a paste susceptible to kneading, which is normally from 20 to 25% of dry material. After kneading said paste, which is carried out by conventional methods, the resulting paste is molded into the desired shape for the purpose of obtaining a "crude" molded product. The molding can be carried out by any conventional method or technique, for example, by means of extrusion, pressing, etc. In a particular embodiment, when the ceramic product is a roofing tile, the molding is carried out by extrusion.

Then, the "crude" molded product is dried and fired at the suitable temperature. In a particular embodiment, the "crude" molded product is introduced in a kiln and heated to a temperature comprised between 900°C and 1000°C for a time period comprised between 5 and 7 hours.

Ceramic products have been manufactured using said PCC of sugar origin as a raw material together with carbonate-deficient clay-based materials (see Example 2), and their properties and physicochemical and mineralogical features have been evaluated by means of the relevant standards, observing that said PCC of sugar origin is not only a material useful as a raw material for manufacturing porous ceramic products, but it also further improves some properties and features of the final product. Generally, the comparison of said PCC of sugar origin to other commercial calcium carbonates has clearly shown that said PCC of sugar origin is useful in the same fields of application as the calcium carbonates, with the exception of those in which the color is the most important requirement.

The use of PCC of sugar origin as a raw material in manufacturing porous ceramic products can imply an energy savings during the manufacturing process of said porous ceramic products since its decomposition temperature is lower than that of natural calcium carbonates and, therefore, the calcium is available for forming calcium silicates at a lower temperature. Although it is not the intention to be linked to any theory, it is believed that the presence of organic matter in said PCC of sugar origin, typically comprised between 6% and 11% by weight, in some way contributes to reducing the energy that must be provided for reaching the decomposition temperature of the calcium carbonate present in said PCC of sugar origin.

The porous ceramic product which can be obtained by means of the previously mentioned process constitutes a further object of this invention.

The following examples serve to illustrate the invention and should not be considered limiting of the scope thereof.

**EXAMPLE 1**

**Characterization of PCC of sugar origin**

A representative fraction of PCCs of sugar origin generated in the sugar industry was subjected to different studies for the purpose of analyzing its chemical, mineralogical composition and properties.

1.1 Chemical composition

The PCCs of sugar origin generated in a sugar mill facility exhibit a chemical composition which can slightly vary, depending on the source limestone and on how the process is carried out. A typical chemical composition of PCC of sugar origin, such as the one used in the embodiment of this Example, is included in Table 1, where it is compared with the composition of a ground calcium carbonate (GCC), of the type conventionally used in manufacturing bricks (commercial product supplied by "Blancos y Carbonates Rodenses, S.L.).

Table 1

| Typical chemical composition of a PCC of sugar origin and a GCC | | |
|---|---|---|
| COMPONENT | AMOUNT (%) OF PCC OF SUGAR ORIGIN | AMOUNT (%) OF GCC |
| CaO | 46.57 | 54.04 |
| MgO | 1.69 | 0.76 |
| $Fe_2O_3$ | 0.29 | 0.33 |
| Insoluble residue | 2.24 | 2.21 |
| $SO_3$ | 0.25 | 0.56 |
| LOI | 48.96 | 42.1 |
| **Total** | **100%** | **100%** |
| LOI: Losses on ignition, according to UNE 83-433-86 Chemical analysis: Measured by x-ray fluorescence. Insoluble residue: Acid etching with hydrochloric acid. | | |

1.2 Mineralogical composition

The x-ray diffraction study of a sample of PCC of sugar origin clearly showed that the calcite variety calcium carbonate is detected as a predominant crystalline phase, furthermore observing indications or traces of quartz and/ or phyllosilicates (clay).

The diffractometer study of the sample calcined at 1,050°C clearly showed the transformation of practically all of the PCC of sugar origin sample, from calcium carbonate to calcium oxide, which corroborates the high grade of purity of the calcium carbonate constituting the main crystalline phase of the sample.

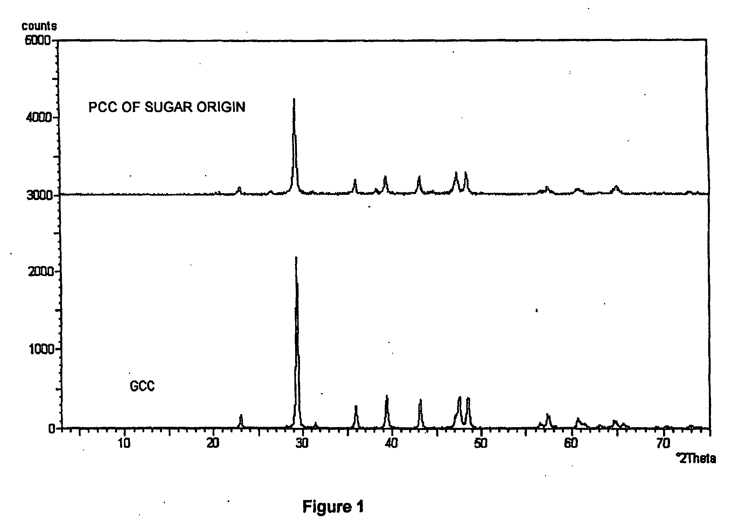

Figure 1 shows the X-ray diffraction pattern of a PCC of sugar origin (section 1.1) and of a GCC supplied by "Blancos y Carbonates Rodenses, S.L.", where it can be seen that both samples practically have the same x-ray diffractogram.

### 1.3 Physicochemical properties

The values of several parameters of the PCCs of sugar origin can range within a relatively broad interval, as shown in Table 2, which also indicates the specific value for each parameter considered of a PCC of sugar origin sample used in this test.

Table 2

| Physicochemical properties of PCC of sugar origin | | |
|---|---|---|
| **Parameter** | **Interval** | **Value** |
| Amount of organic matter (% weight) | 6-11 | 9.8 |
| Loss on ignition at 1,050°C (ATD-TG) (% weight) | 47-50 | 48.96 |
| Insoluble residue at 1,050°C | 2-2.5 | 2.24 |
| Average diameter 80%< 10 μm | 5-10 | 8.5 |
| Density (g/cm$^3$) | 2.3-2.5 | 2.4 |
| Color | L*= 70-81<br>A*= 2.4-3.5<br>b*= 11-15 | 76<br>3.2<br>12.5 |
| PH | 8-10 | 9 |

Organic matter: Method for soils. UNE 103-204-93

Loss on ignition: UNE 83-433-86

Insoluble residue: Acid etching with hydrochloric acid.

Average diameter: SediGraph 5100 (V3.05) particle size analysis system

Density: Micromeritics Accupyc 1330 Helium Pycnometer

Color: *"Microcolor"*. Apparatus for measuring color differences with data station.

The **L\*** value indicates the position on the brightness or lightness/darkness axis, the **a\*** value indicates the position on the red/green axis, and the **b\*** value indicates the position on the blue/yellow axis.

pH: Glass electrode.

### 1.4 Particle size distribution

The particle size study of the PCC of sugar origin used in this test clearly showed that, from the particle size point of view, the PCC of sugar origin has 80% by weight of particles with a size of less than 10 μm, a value similar to that of the most frequently industrially used calcium carbonates.

### 1.5 Thermal analysis

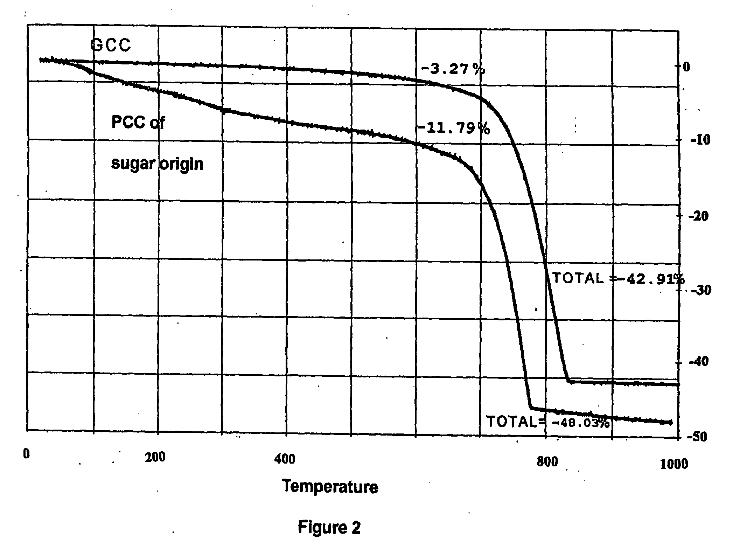

A PCC of sugar origin sample and another GCC sample (commercial product supplied by "Blancos y Carbonatos Rodenses, S.L.) were subjected to thermal analysis, a technique in which the temperature difference between a substance and a reference material is measured according to the temperature when the substance and the standard are subjected to a controlled temperature program. The temperature program normally implies heating the sample and the reference material such that the temperature of the sample increases linearly over time. The temperature difference between the sample temperature and the reference temperature is controlled and is represented in relation to the temperature so as to provide a differential thermogram. Figure 2 shows the mass loss rate (%) that the PCC of sugar origin sample undergoes, as well as that of the GCC, as the temperature increases. Said figure 2 also shows the existence of a single phase corresponding to the calcium carbonate. By comparing the thermogram of the PCC of sugar origin to that of the GCC, it is clearly shown that the PCC of sugar origin is a material with a high calcium carbonate content. In the case of PCC of sugar origin, it can additionally be seen that the calcium carbonate completely decomposes at approximately 770°C (in inert atmosphere), whereas in the case of GCC, this does not occur until approximately 840°C, under the same conditions.

1.7 Conclusion

As a whole, the obtained results seem to suggest the capacity of said PCCs of sugar origin to be used as raw materials in manufacturing porous ceramics from carbonate-deficient clay materials.

**EXAMPLE 2**

**Use of PCC of sugar origin in the porous ceramic industry**

In view of the results obtained after characterizing the PCCs of sugar origin, the possibility of using said PCCs of sugar origin in the porous ceramic industry, as a raw material and as an additive for correcting certain irregularities in the ceramic pieces, was then evaluated. Laboratory scale, pilot plant and industrial scale tests were carried out for that purpose.

2.1 Laboratory

Having characterized the raw materials, the clay-based material (composed of minerals of clay: kaolinite, illite and, in a smaller ratio, smectite; traces of carbonate and a significant amount of quartz) and PCC of sugar origin (the features of which were disclosed in Example 1), laboratory scale mixtures were carried out with different PCC of sugar origin ratios for the purpose of trying to find the optimal clay/PCC of sugar origin ratio.

| Mixtures | Red clay (%) | PCC of sugar origin (%) |
|---|---|---|
| CLAY | 100 | - |
| CLAY:PCC OF SUGAR ORIGIN 8:2 | 80 | 20 |
| CLAY:PCC OF SUGAR ORIGIN 9:1 | 90 | 10 |

Pressed pellets were made with said clay/PCC of sugar origin mixtures in order to subsequently fire them at different temperatures and to measure the color exhibited after the firing, since this is a very relevant parameter in the ceramic industry.

2.2 Pilot plant

A first pilot plant test was carried out as from the laboratory scale results obtained, in which pilot plant small porous ceramic pieces (roofing tiles) were obtained at an approximate 6% PCC of sugar origin ratio (corresponding to approximately 5.2% by weight of calcium carbonate). These pieces were made by following a conventional ceramic process having the following steps:

- Metering and mixing the raw materials (clay and PCC of sugar origin)
- Sieving
- Kneading and extrusion
- Cutting
- Drying
- Firing
- Piling and palletizing
- Final product

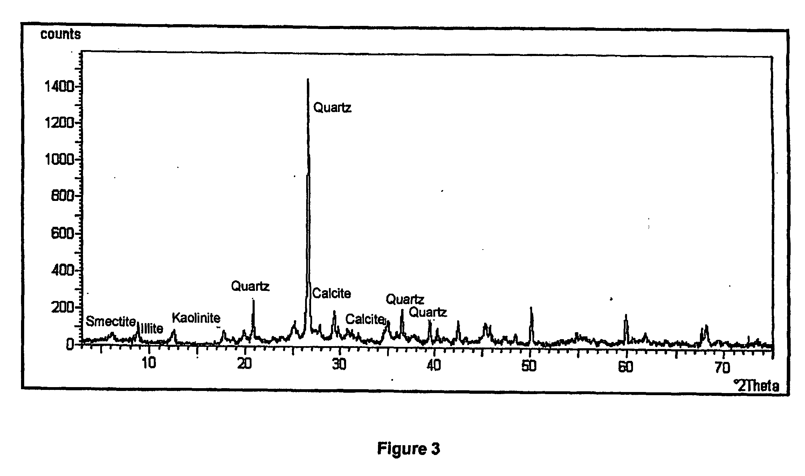

All the roofing tiles followed the same process until the firing, since different roofing tiles were fired at different temperatures (900, 935, 950, 970 and 1000°C) in order to evaluate the variation of their properties.
Tests were carried out for characterizing the mixtures in the different manufacturing steps: of the powder, ceramic paste, dry pieces and fired pieces.
Particle size, X-ray diffraction and the percent moisture content of the mixture were carried out on the powder. The X-ray diffractograms were carried out with a PHILIPS model PW-1710 diffractometer. Figure 3 shows the X-ray diffractogram obtained. Particle size was measured by using a SediGraph 5100 (V3.0) particle size analysis system. The percent moisture content was calculated by means of the difference of weight after drying in a kiln at 110°C, obtaining a value of 3.4%.

The plasticity of the mixture was measured as from the paste in order to determine whether it was a sample suitable for being extruded. The water ratio which is added upon kneading was also calculated. (Liquid limit of a soil by the Casagrande apparatus method, UNE 103103:1994. Plastic limit of a soil, UNE 103104:1993). The obtained results were the following:

percentage (%) of water added: 26.4%
Plasticity index: 16.5

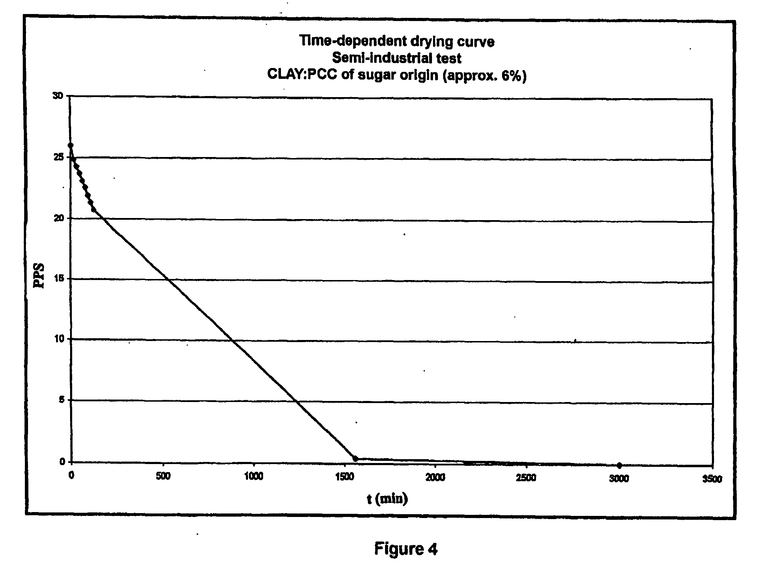

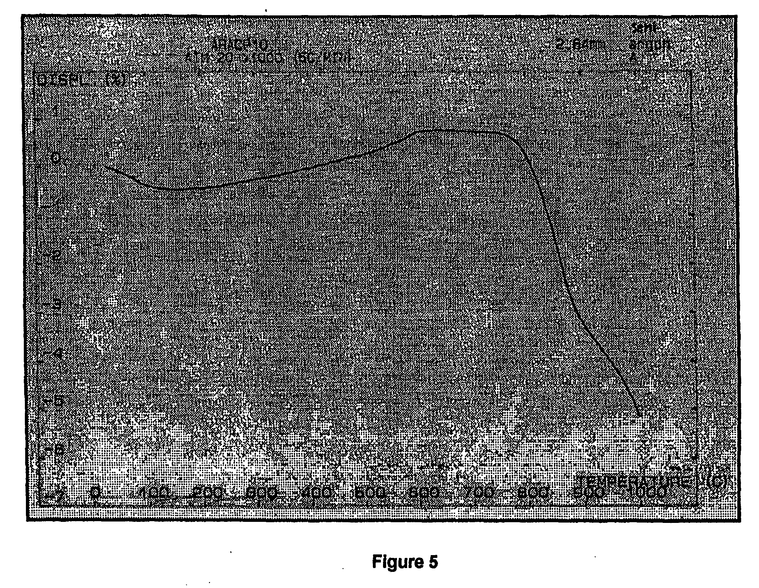

A drying curve was carried out with the dry pieces in order to obtain information on the critical point (moisture at which the piece no longer shrinks), as well as a dilatometry for the purpose of knowing the expansion or shrinkage the piece will undergo when it is fired at different temperatures. A time-dependent direct measurement of the pieces was taken in order to make the drying curve. The obtained results are shown in figure 4. A SETARAM dilatometer equipment, with 92-16.18 kiln and TMA 92 dilatometer head, was used for measuring the dilatometry. Figure 5 shows the dilatometry test result.

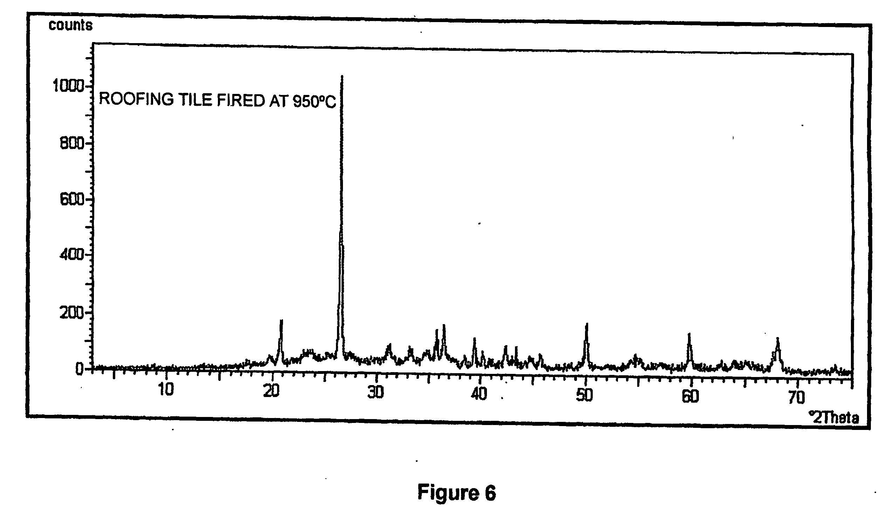

Lastly, XRD tests were carried out on the fired pieces to see the crystalline phases that had disappeared and those which were formed again when said piece was melted. Figure 6 shows the X-ray diffractogram obtained.

Furthermore, the dry and fired pieces were subjected to scanning electron microscopy to measure the size of the pores of the pieces and the better or worse melting of said pieces at each temperature.

The final product (roofing tile) must comply with certain requirements. One of the most important ones is frost susceptibility, therefore these tests (UNE-EN 539-2) were also carried out, obtaining good results, therefore the research continued.

2.3 Industrial scale production

Industrial tests were subsequently initiated in order to check the repeatability of the pilot plant tests when it becomes a large scale production. The steps to follow were the same as in the pilot plant, somewhat varying the clay: PCC of sugar origin mixture, since this mixture had approximately 7% PCC of sugar origin (corresponding to approximately 6% by weight of calcium carbonate).

Some roofing tiles were fired at 930°C and other roofing tiles at 970°C (five and a half hours in the kiln), checking that:

i) all the pieces fired at 970°C underwent load deformation (slight deformation that roofing tiles undergo in the widest part thereof, causing the roofing tile to inwardly close, thereby not fitting together with other roofing tiles), although in the case of the roofing tiles obtained with the clay and PCC of sugar origin mixture, the load deformation was slightly less than that of the rest of the roofing tiles manufactured without said mixture (determined by direct observation); and
ii) none of the roofing tiles obtained at 930°C underwent load deformation.

In a second industrial test, this time carried out with a Red Clay:PCC of sugar origin ratio of 5:3, thereby the calcium carbonated ratio was approximately 17%, the roofing tiles fired at 930°C as well as at 970°C with this other ratio of PCC of sugar origin (approximately 18.8%) did not undergo load deformation and comply with UNE standards required for this type of materials.

**Claims**

1. A process for manufacturing porous ceramics comprising:

a) mixing a carbonate-deficient clay-based material, a precipitated calcium carbonate (PCC) of sugar origin and water to obtain a paste susceptible to kneading.
b) kneading said ceramic paste susceptible to kneading obtained in step a);
c) molding said paste kneaded in step b) into the desired shape to obtain a molded material; and
d) drying and firing said molded material to obtain a porous ceramic product.

2. A process according to claim 1, wherein said PCC of sugar origin is in the form of particles with a size equal to or less than 20 μm.

3. A process according to claim 1, wherein at least 80% of the particles of said PCC of sugar origin have a size equal to or less than 10 µm.

4. A process according to claim 1, wherein said manufactured porous ceramic product is selected among bricks, roofing tiles, floor tiles, glazed wall tiles.

5. A paste comprising a clay-based material, a precipitated calcium carbonate (PCC) of sugar origin and water.

6. The use of a precipitated calcium carbonate (PCC) of sugar origin as a raw material in the porous ceramic industry.

**Figure 1**

EP 1 498 399 A2

Figure 2

Figure 3

Time-dependent drying curve
Semi-industrial test
CLAY:PCC of sugar origin (approx. 6%)

Figure 4

Figure 5

Figure 6

EP 1 498 399 A2